## Europäisches Patentamt
## European Patent Office
## Office européen des brevets

(11) Veröffentlichungsnummer: **0 229 296 B1**

## (12) EUROPÄISCHE PATENTSCHRIFT

(45) Veröffentlichungstag der Patentschrift: 27.03.91

(51) Int. Cl.⁵: **A22C 11/06, A22C 11/02**

(21) Anmeldenummer: 86116944.9

(22) Anmeldetag: 05.12.86

(54) Verfahren und Vorrichtung zum Abfüllen lufthaltiger, verformbarer Massen.

(30) Priorität: 16.12.85 DE 3544448

(43) Veröffentlichungstag der Anmeldung:
22.07.87 Patentblatt 87/30

(45) Bekanntmachung des Hinweises auf die
Patenterteilung:
27.03.91 Patentblatt 91/13

(84) Benannte Vertragsstaaten:
AT CH DE ES FR GB IT LI NL

(56) Entgegenhaltungen:
WO-A-81/03259          DE-A- 2 038 010
DE-A- 3 227 616        DE-A- 3 232 185
DE-A- 3 319 139        FR-A- 1 400 631
US-A- 3 161 910        US-A- 3 166 786
US-A- 3 189 940        US-A- 3 537 129
US-A- 4 562 615

(73) Patentinhaber: Albert Handtmann Maschinenfabrik GmbH & Co. KG
Birkenallee 25-29
W-7950 Biberach a.d. Riss 1(DE)

(72) Erfinder: Staudenrausch, Georg
Rosenstrasse 18
W-7950 Biberach 18(DE)
Erfinder: Handtmann, Thomas

Vorarlbergerstrasse 25
W-7950 Biberach(DE)
Erfinder: Kern, Manfred
Manlichstrasse 13
W-7951 Ummendorf(DE)
Erfinder: Schraivogel, Jürgen
Mettenbergweg 4
W-7950 Biberach(DE)
Erfinder: Zinser, Georg
Am Ränkle 8
W-7951 Winterstettenstadt(DE)
Erfinder: Abt, Franz
Beethovenweg 14
W-7957 Schemmerhofen(DE)
Erfinder: Reutter, Siegfried
Oberessendorfer Strasse 4
W-7951 Eberhardzell(DE)
Erfinder: Fesseler, Einar
Winterreuterstrasse 2
W-7951 Maselheim-Ellmansweiler(DE)

(74) Vertreter: Patentanwälte Grünecker, Kinkeldey, Stockmair & Partner
Maximilianstrasse 58
W-8000 München 22(DE)

Rank Xerox (UK) Business Services

## Beschreibung

Die Erfindung betrifft ein Verfahren zum Abfüllen lufthaltiger, verformbarer Massen, insbesondere zum Abfüllen von Wurstmassen, bei dem die Masse in einem Massestrom von einem Vorratsraum in einen Füllzylinder überführt wird, in welchem zur Entlüftung der Masse ein Unterdruck bezüglich des Vorratsraumes erzeugt wird und bei dem die überführte Masse dann mit einem im Füllzylinder angeordneten Kolben aus diesem ausgestoßen wird.

Die Erfindung betrifft außerdem eine Vorrichtung zum Durchführen eines solchen Verfahrens, mit einem Fülltrichter, mit einem Füllzylinder, der mit dem Fülltrichter über eine mit einem Einlaufschieber verschließbare Öffnung in Verbindung steht und in dem ein Kolben angeordnet ist, mit einer schiebergesteuerten Auslaßöffnung, durch die die vom Fülltrichter in den Füllzylinder geförderte Masse durch Steuerung des Kolbenhubs in dosierbaren Mengen ausgestoßen werden kann und mit einem Ventil, über das der Füllzylinder beim Befüllen mit Masse aus dem Fülltrichter unter Vakuum gesetzt wird.

Ein derartiges Verfahren und eine solche Vorrichtung ist aus der EP-A-0129703 bekannt. Dort wird die abzufüllende Masse zunächst in einen Fülltrichter eingefüllt. Nach Verschließen des Fülltrichters mit Hilfe eines Deckels wird im Fülltrichter ein Unterdruck erzeugt. Die eingefüllte Masse wird mit einem Rührwerk umgerührt. Dabei sollen Luftblasen, die in der Masse eingeschlossen sind, entweichen. Nach unten hin wird der Fülltrichter durch einen Einlaufschieber vom Füllzylinder getrennt.

Zur Vorbereitung des Befüllens des Füllzylinders mit der im Fülltrichter sich befindenden Masse wird der Kolben des Füllzylinders nach unten gefahren, so daß ein Unterdruck entsteht. Der dann im Füllzylinder erhaltene Druck wird durch Anschließen einer Vakuumpumpe zumindest aufrechterhalten. Dann wird der Einlaßschieber geöffnet und die sich im Fülltrichter befindende Masse aufgrund der Druckdifferenz zwischen Fülltrichter und Füllzylinder in den Füllzylinder eingesaugt. Beim Durchtritt durch den Einlaufschieber in den Füllzylinder vereinzelt sich die Masse aufgrund der erzeugten Druckdifferenz und der hohen Überführungsgeschwindigkeit. Dadurch sollen evtl. eingeschlossene Restluftblasen aus der Masse entweichen und über die Vakuumpumpe abgesaugt werden können. Die Befüllung wird dann solange vorgenommen, bis der Füllzylinder vollständig aufgefüllt ist. Der als Schaltventil ausgebildete Einlaßschieber wird dann geschlossen. Dann wird ein Schieber in eine Auslaßöffnung des Füllzylinders geöffnet und die abzufüllende, sich nun im Füllzylinder befindende Masse durch Steuerung des Kolbenhubs durch die Auslaßöffnung hindurch zum Befüllen beispielsweise einer Darmraupe oder auch von Dosen ausgeschoben.

Dieses bekannte Verfahren und die geschilderte Vorrichtung weisen jedoch einige Nachteile auf.

Aufgrund der erzeugten Druckdifferenz zwischen Fülltrichter und Füllzylinder ist es zwar möglich, die abzufüllende Masse relativ schnell vom Fülltrichter in den Füllzylinder zu überführen, was im Hinblick auf die angestrebte hohe Abfülleistung derartiger Vorrichtungen von Vorteil ist, eine ausreichende Entlüftung der lufthaltigen Masse ist damit jedoch nicht zu gewährleisten. Dies liegt einmal daran, daß sich das unter Vakuum haltende Volumen im Füllzylinder während des Befüllens laufend ändert. Der Füllstand der eingefüllten Masse steigt allmählich vom Zylinderboden solange an, bis der Füllzylinder gefüllt ist. Entsprechend nimmt das freie Zylindervolumen allmählich ab. In diesem sich laufend ändernden Volumen kann aber kein konstanter gleichmäßiger Unterdruck aufrechterhalten werden, so daß die Oberfläche je nach Füllstand unterschiedliche Bedingungen vorfindet und daher eine gleichmäßige Evakuierung der einströmenden Masse nicht möglich ist.

Noch gravierender ist der Nachteil, daß dort die abzufüllende Masse beim Öffnen des Schiebers aus dem Trichter in den Füllzylinder praktisch in Richtung der Hauptachse des Zylinders einfällt. Dabei bringt der Massestrom beim Eindringen in die bereits im Füllzylinder vorhandene Masse Luft mit sich. Der einstürzende Massestrom sinkt verhältnismäßig tief in die bereits vorhandene Masse ein, so daß sich verhältnismäßig weit innen in der Masse Lufteinschlüsse ergeben, die auch durch die Entlüftung bzw. das Vakuum im noch nicht aufgefüllten Restvolumen des Zylinders nicht mehr beseitigt werden können.

Je größer die Einströmgeschwindigkeit ist und je dünnflüssiger die abzufüllende Masse ist, desto schwerwiegender sind diese Probleme.

Ein weiterer Nachteil liegt darin, daß im Fülltrichter selbst ein Unterdruck erzeugt werden muß, um eine ausreichende Entlüftung der abzufüllenden Masse zu erhalten. Neben den hierfür zusätzlich erforderlichen Aggregaten und Leitungen ist es dabei insbesondere nachteilig, daß der Fülltrichter nicht zu jedem gewünschten Zeitpunkt befüllt werden kann, weil hierzu der Trichter zunächst belüftet und dann der Deckel abgenommen werden muß. Nach dem Einfüllen muß dann vor dem Überführen in den Füllzylinder der vorgesehene Unterdruck erneut erzeugt werden.

Schließlich ist dort von Nachteil, daß die Einfüllgeschwindigkeit nicht genau gesteuert werden kann. Prinzipiell kann zwar durch Vorwahl einer bestimmten Druckdifferenz zwischen Fülltrichter und Füllzylinder die Abfüllgeschwindigkeit beeinflußt werden, eine echte Steuerung ist jedoch aber deshalb nicht möglich, weil die Einfüllgeschwindigkeit auch noch von weiteren Einflußgrößen, insbesondere von der Konsistenz der jeweils abzufüllenden Masse, abhängig ist. Da die Einfüllgeschwindigkeit durch den Differenzdruck gesteuert wird, machen sich Schwankungen des Differenzdruckes durch entsprechende Schwankungen der Einfüllgeschwindigkeit direkt bemerkbar. Da sich andererseits die Einfüllgeschwindigkeit wiederum auf den Evakuierungsgrad der Brätmasse auswirkt, stehen Schwankungen des Differenzdrucks ebenfalls einer gleichmäßigen Entlüftung der abzufüllenden Masse entgegen.

Der Erfindung liegt die Aufgabe zugrunde, ein Verfahren und eine Vorrichtung der eingangs genannten Art derart weiterzubilden, daß lufthaltige, verformbare Massen schnell, kontinuierlich und mit gleichmäßig hohem Entlüftungsgrad abgefüllt werden können.

Diese Aufgabe wird mit einem Verfahren der eingangs genannten Art gelöst, welches dadurch gekennzeichnet ist, daß der Massestrom beim Überführen in den Füllzylinder so gelenkt wird, daß er sich beim Eintritt in den Füllzylinder unter Bildung eines Winkels zur Verschieberichtung des Kolbens zunächst zur Zylinderwand hin bewegt und daß der Füllstand während des Befüllens mit Masse im Füllzylinder derart geregelt wird, daß während des Befüllens ein im wesentlichen konstanter Freiraum im Füllzylinder verbleibt.

Zur Lösung der gestellten Aufgabe tragen diese Verfahrensschritte folgendes bei:

Die Ablenkung des Massestroms beim Eintritt in den Füllzylinder in Richtung auf die Wandung des Füllzylinders bewirkt, daß der Massestrom etwa schräg von oben gegen die Zylinderwand fließt, so daß sich an dieser Stelle gewissermaßen ein Berg von Wurstmasse aufbaut, der schräg nach unten wie bei einem Überquellen abfließt, wodurch das jeweils neu einfließende Volumen immer an der Oberfläche bleibt und durch das Vakuum im Freiraum infolge der großen Oberfläche und der verhältnismäßig geringen Schichten optimal entlüftet werden kann. Es wird durch dieses schräge Anströmen der Zylinderwand die Gefahr vermieden, daß die einschießende Masse tief in die bereits vorhandene Masse eindringen kann und dabei Luftblasen mit nach unten reißen könnte.

Der einfließende Massestrom findet während des gesamten Füllvorganges bezüglich der Entlüftung immer dieselben Bedingungen vor, weil der Füllstand auf einem konstanten Pegel gehalten wird, d.h., zu Beginn des Abfüllvorganges ist der Kolben am weitesten nach oben gefahren und fährt dann beim Befüllen nach unten, wobei das sich dabei vergrößernde Volumen in Koordination mit der Bewegung des Kolbens nach unten mit einströmender Masse aufgefüllt wird, so daß der Füllstand im Füllzylinder im wesentlichen während des gesamten Füllvorgangs einen konstanten Pegel innehält.

Das Abfüllen wird dabei so geregelt, daß ein gewisser, konstanter Freiraum im Füllzylinder verbleibt. Dieser Freiraum wird kontinuierlich evakuiert. Weil der Freiraum volumenmäßig im wesentlichen konstant geregelt wird, muß das Vakuumsystem während des gesamten Befüllvorgangs ein relativ kleines, aber konstantes Volumen entlüften, was sehr gleichmäßig geschehen kann. Dadurch findet die gesamte abzufüllende Masse dieselben Bedingungen hinsichtlich der Evakuierung von eingeschlossenen Luftblasen vor, so daß sich eine sehr gleichmäßige Entlüftung erzielen läßt.

Durch diese Merkmale ist es dann auch nicht mehr notwendig, bereits im Fülltrichter zu evakuieren, weil sich durch die geschilderte Vorgehensweise und insbesondere dadurch, daß man dem abzufüllenden Massestrom einen ganz bestimmten Weg vorschreibt, eine ausgezeichnete Entlüftung allein beim Überführung des Massestroms entlang dieses Weges erzielen läßt.

In vorteilhafter Ausgestaltung des Verfahrens ist vorgesehen, daß vom Beginn des Befüllvorganges der befüllbare Innenraum des Füllzylinders durch Abfahren des Kolbens von Null an kontinuierlich vergrößert wird. Zu Beginn des Befüllvorganges nimmt somit der Kolben seine oberste Stellung ein und saugt dann mit einsetzender Bewegung nach unten die abzufüllende Masse in den Zylinderinnenraum ein. Der Kolben wird dann weiter kontinuierlich nach unten gefahren, wobei der eintretende Massestrom durch eine entsprechende Regelung des Öffnungsquerschnittes, durch den die Masse in den Zylinderraum eintritt, so geregelt wird, daß der konstante Freiraum aufrechterhalten bleibt.

Es wäre auch denkbar, den Öffnungsquerschnitt der Öffnung, durch die der Massestrom eintritt, konstant zu halten und die geschilderte Regelung des Freiraums durch Steuerung der Abwärtsbewegung des Kolbens zu bewirken.

In vorteilhafter Weiterbildung des Verfahrens ist vorgesehen, daß die Entlüftung des Füllzylinders an einer der Auftreffstelle des Massestroms an der Zylinderwand diametral gegenüberliegenden, am höchsten Punkt des Füllzylinders gelegenen Stelle vorgenommen wird. Die Masse läuft von ihrer Auftreffstelle an der Zylinderwand unter Bildung eines "Höhenrückens" zu der der Auftreffstelle gegenüberliegenden Seite der Zylinderwand. Der Freiraum besitzt an dieser Stelle sein größtes Volumen, weil sich dort der größte Abstand zwischen eingefüllter Masse und Zylinderdeckel einstellt.

Mit dem erfindungsgemäßen Verfahren ist es möglich, wie bereits erwähnt, den Vorratsraum während des Befüllens des Füllzylinders unter atmosphärischem Druck zu halten.

Dies hat zur Folge, daß bereits mit einem relativ geringen Vakuum ein so großen Differenzdruck zwischen Fülltrichter und Füllzylinder erzeugt werden kann, daß die Masse wie gewünscht in sehr kurzer Zeit in den Füllzylinder überführt werden kann. Da somit bei dem erfindungsgemäßen Verfahren bereits ein relativ geringer Unterdruck ausreicht, die Überführung zu beschleunigen und das Brät zu entlüften, besteht bei dem erfindungsgemäßen Verfahren nicht die Gefahr, daß dünneres Brät von der den Unterdruck erzeugenden Einrichtung angesaugt werden könnte.

Mit einer Vorrichtung der eingangs genannten Art wird die gestellte Aufgabe dadurch gelöst, daß die Öffnung so angeordnet und ausgebildet ist, daß der durchtretende Massestrom auf die Zylinderwand hingelenkt wird und daß ein Sensor vorgesehen ist, der den Füllstand während des Befüllens des Füllzylinders erfaßt und daß eine Regeleinrichtung vorgesehen ist, die während der beim Befüllen erfolgend Abwärtsbewegung des Kolbens den Einlaufschieber abhängig von den Signalen des Sensors derart steuert, daß beim Befüllen ein im wesentlichen konstanter Freiraum zwischen Masse und Füllzylinderdeckel verbleibt.

Bei dieser erfindungsgemäßen Vorrichtung wird also mit Hilfe eines Sensors der Füllstand und damit der zu re gelnde Freiraum erfaßt und es wird dann der Füllvorgang so geregelt, daß das Volumen des Freiraums im wesentlichen konstant gehalten wird. Die Öffnung, durch die die Masse in den Füllzylinder eintritt, wird weiterhin so angeordnet und ausgebildet, daß der durchtretende Massestrom den ihm vorbestimmten Weg nimmt, d.h., in Richtung auf die Zylinderwand hingelenkt wird.

In vorteilhafter Ausgestaltung der Vorrichtung ist vorgesehen, daß die Öffnung im Füllzylinderdeckel seitlich versetzt zur Achse des Füllzylinders angeordnet ist und daß das Ventil im Zylinderdeckel etwa diametral zu der Stelle, an der der durch die Öffnung eintretende Massestrom auf die Zylinderwand auftrifft, angeordnet ist. Durch diese Anordnung der Öffnung wird der Massestrom unmittelbar hinter der Öffnung gegen die Zylinderwand gelenkt und fließt dann von der Auftreffstelle diametral zur anderen Seite, .wo von oben über das Ventil der sich dabei einstellende Freiraum entlüftet wird. Die eintretende Masse findet dabei während des gesamten Füllvorgangs immer die gleichen Evakuierungs-und Entlüftungsbedingungen vor.

In einer weiteren Ausgesaltung der Erfindung ist vorgesehen, daß die Umlenkung des Massestroms zur Zylinderwand durch entsprechende Formung der die Öffnung begrenzenden Vorderkante des Einlaufschiebers vorgenommen wird. Die Formung des Einlaufschiebers wird abhängig von der Form der Öffnung bestimmt und so gewählt, daß die einströmende Masse zur Zylinderwand wie beschrieben gelenkt wird. Der Schieber wird niemals ganz aufgesteuert, so daß er seine Ablenkfunktion auch dann erfüllt, wenn er am weitesten zurückgezogen ist, was dann der Fall ist, wenn relativ zähfließende Massen abgefüllt werden sollen. Der Schieber überdeckt die Durchtrittsöffnung immer so, daß die Ablenkfunktion noch vorhanden ist.

Eine weitere vorteilhafte Ausgestaltung der Erfindung sieht vor, daß das Ventil als Schwenkklappe ausgebildet ist und zugleich der Sensor ist. Durch diese Ausgestaltung wird erreicht, daß auch das Messen des Füllstandes auf der Seite vorgenommen wird, an der der Freiraum am größten bleibt. Die Schwenkklappe, die die Öffnung verschließt, über die entlüftet wird, schwimmt dabei auf der einlaufenden Masse auf. Die Schwenkklappenstellung ist somit ein Maß dafür, wie groß der noch vorhandene Freiraum für eine bestimmte einzufüllende Masse ist. Abhängig von der Stellung der Schwenkklappe wird dann der Einlaufschieber auf- und zugesteuert, so daß der Schwenkklappenwinkel während des gesamten Füllvorgangs im wesentlichen konstant und damit auch der Freiraum im wesentlichen konstant geregelt wird.

In weiterer Ausgestaltung der Erfindung ist vorgesehen, daß über dem Füllzylinderdeckel eine Abdeckung vorgesehen ist, die einen Hohlraum begrenzt, an dem das Vakuumsystem angeschlossen ist und mit dem der Füllzylinder über das Ventil in Verbindung steht.

Dieser von der Abdeckung begrenzte Hohlraum dient als Vakuumdurckausgleichsraum und puffert starke Druckschwankungen ab. Durch diese Maßnahme wird die Aufrechterhaltung konstanter Bedingungen im Füllzylinder somit weiter gefördert. Zugleich dient dieser Raum als Wasserabscheider.

Eine weitere Ausgestaltung der Erfindung sieht vor, daß im Bereich des Einlaufschiebers auf der Füllzylinderseite ein breiter, aber niedriger Kanal mündet, der zu dem Hohlraum führt. Mit dieser Maßnahme wird ein Kanal geschaffen, über den Luft bereits vom Eintrittsbereich der Masse in den Hohlraum entweichen kann.

Gemäß einem weiteren Merkmal der Erfindung ist vorgesehen, daß ein Zeitmesser vorhanden ist, durch den die Zeit, die zwischen Öffnen des Einlaßschiebers und dem ersten Aufschwimmen der Schwenkklappe vergeht, gemessen wird, und daß abhängig von dieser Zeit die Regelbedingungen des Regelkreises für eine bestimmte Masse festgelegt werden. Diese Ausgestaltung macht sich die Erkenntnis zunutze, daß für dünne Massen bzw. bei hohem Vakuum die Einfüllzeit, die zwischen Öffnen des Einlaßschiebers und dem ersten Aufschwimmen der Schwenkklappe vergeht, erheblich kleiner ist, wie z.B. bei dickeren Massen oder bei niedrigerem Vakuum. Die Zeit, die daher zwischen dem Öffnen des Einlaßschiebers und dem ersten Aufschwimmen vergeht, ist daher eine Größe, aus der die jeweiligen optimalen Regelbedingungen abgeleitet werden können. Diese Masseerkennung wird nach jedem Arbeitsbeginn (Chargenwechsel, Vakuumänderung) durchgeführt und bleibt dann für diejenigen Befüllzyklen, in denen nachfolgend die im Fülltrichter sich befindende Masse abgefüllt wird, abgespeichert. In der Praxis kann es ausreichend sein, die Maschine so auszulegen, daß sie in drei unterschiedlichen Bereichen arbeitet, jeweils angepaßt an dünne, mittlere und schwere Massen. Für den Prüfhub, bei dem ermittelt werden soll, welche Masse vorliegt, wird dann günstigerweise die Maschine unter Bedingungen hochgefahren, wie sie für mittlere Massen angewandt werden sollen. Die Maschine kann dann durch die erfolgte Zeitmessung feststellen, ob der Bereich der richtige ist, oder ob auf dem Bereich für zähe oder für dünnflüssige Massen umgeschaltet werden soll. Durch diese Vorgehensweise genügt ein Prüfhub, um die jeweils geeigneten Regelbedingungen festlegen zu können.

Beim Regelvorgang kann beispielsweise auch das Vorhandensein sehr klebriger Masse dadurch berücksichtigt werden, daß man den Füllhub des Kolbens verlangsamt, damit die Luft Zeit hat, unter Vakuum aus dem Brät auszutreten.

Dadurch kann dann verhindert werden, daß die lufthaltige klebrige Masse unter Vakuum aufschäumt und sich ausdehnt. In diesem Zusammenhang kann es auch günstig sein, den Restluftinhalt festzustellen und das Vakuum danach einzustellen. Dies läßt sich im Füllzylinder selbst durchführen oder auch z.B dadurch erreichen, daß man die Masse auf ihre Volumenveränderung unter Druck in einem Meßzylinder untersucht. Hierzu kann ein eigener separater Raum in der Maschine vorhanden sein, in dem mit einem eigenen Prüfhub eine entsprechende Testmessung vor dem eigentlichen Abfüllen zum Feststellen des Restluftinhaltes durchgeführt wird. Das Ergebnis kann dann durch das Einstellen entsprechender Parameter beim Regelvorgang berücksichtigt werden.

Bei einer weiteren Ausgestaltung der Erfindung, wie sie insbesondere für Vakuumfüller mit besonders hoher Abfüllleistung in Frage kommt, ist vorgesehen, daß der Fülltrichter zwei Auslässe aufweist, über die jeweils ein zugeordneter Füllzylinder über jeweils einen geregelten Einlaufschieber befüllbar ist. Die Einlaufschieber sind dabei unabhängig voneinander regelbar, so daß die Füllzylinder abwechselnd befüllt bzw. ausgefüllt werden können. Die Auslaßkanäle der Füllzylinder können dabei in einer gemeinsame Leitung münden und beispielsweise zu einer Abdrehstation führen, so daß sich mit sehr hoher Leistung kontinuierlich die eingefüllte Brätmasse portionieren läßt. Natürlich kann anstelle einer Abdreheinrichtung auch ein Füllrohr, beispielsweise zum Befüllen von Dosen oder auch eine Vorsatzmaschine nachgeschaltet sein. Der hydraulische Antrieb ist für beide Füllzylinder dann getrennt und jeweils mit einer Regelpumpe versehen, so daß sich die Füllzylinder unabhängig voneinander und/oder in koordinierten Bewegungen betätigen lassen. Diese Funktionen können mit einer Mikroprozessorsteuerung überwacht und geregelt werden.

Insbesondere kann die Ausstoßbewegung des einen Zylinders mit dem Hochlauf des anderen Zylinders so koordiniert werden, daß ein konstanter Volumenstrom an der Auslaßseite erhalten bleibt. Durch diese Überlagerung besteht die Möglichkeit, auch beim Portionieren den Zylinder restlos auszufüllen, auch wenn das Zylindervolumen die eingestellte Portionsgröße unterschritten hat und dann das noch fehlende Volumen mit dem nachfolgenden Zylinder zu ergänzen.

Die Erfindung wird im folgenden anhand der Zeichnungen weiter erläutert und beschrieben.

Figur 1    zeigt eine schematische Schnittdarstellung eines ersten, erfindungsgemäßen Ausführungsbeispiels,

Figur 2    zeigt eine Draufsicht auf den Deckel des Zylinders, wobei die Anordnung der Öffnung und des Ventils und die Ausbreitung des einströmenden Massestroms im Füllzylinder angedeutet ist,

Figur 3    zeigt einen Schnitt entlang der Linie III-III der Figur 2 und

Figur 4    zeigt eine schematisierte Schnittdarstellung eines erfindungsgemäßen Ausführungsbeispiels.

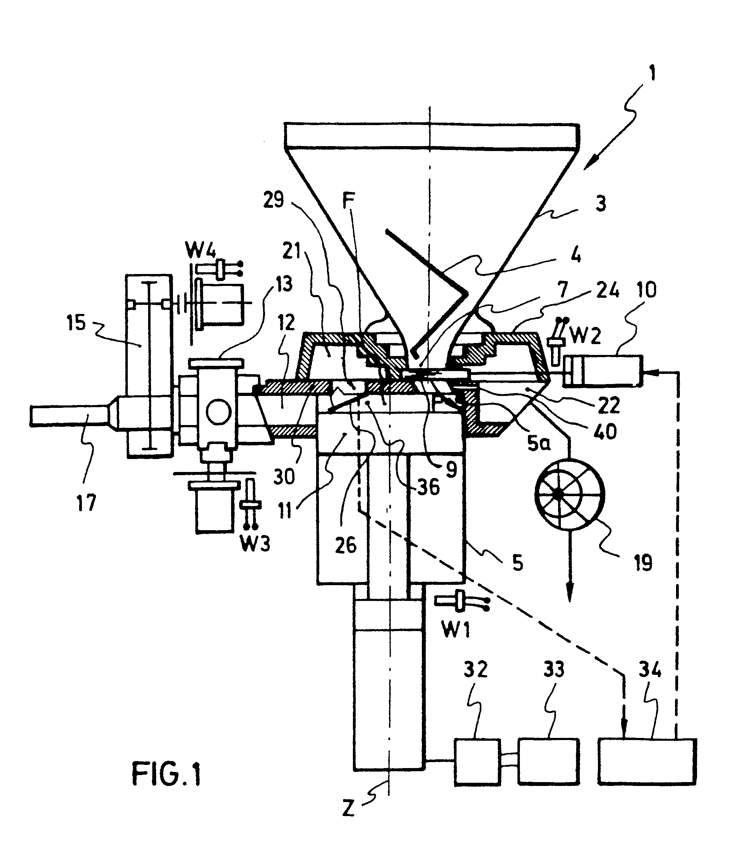

In Figur 1 ist eine erfindungsgemäße Vorrichtung schematisch im Schnitt dargestellt und insgesamt mit 1 bezeichnet. Die Vorrichtung weist einen oben offenen Fülltrichter 3 auf, der nach unten hin in einen Auslaß mündet, von dem eine Öffnung 7 in den Innenraum eines Füllzylinders 5 mündet. In dem Fülltrichter 1 ist eine Zubringerkurve 4 angeordnet, die, wenn sie in Drehbewegung versetzt wird, die in den Fülltrichter eingefüllte und in den Füllzylinder zu überführende Masse zur Öffnung 7 hin fördert.

In der Öffnung 7 ist ein Einlaufschieber 9 angeordnet, der als Flachschieber ausgebildet ist und je nach Stellung die Öffnung 7 mehr oder weniger verschließen bzw. freigeben kann. Der Einlaufschieber 9 wird über einen nach zwei Richtungen beaufschlagbaren Kolbenantrieb 10 gesteuert. Die Ausgestaltung des Einlaufschiebers zusammen mit der Öffnung wird noch weiter unten detaillierter beschrieben werden.

Unterhalb des Fülltrichters 3 ist der Füllzylinder 5 angeordnet, in dem ein Kolben 11 geführt ist.

Seitlich vom oberen Teil des Füllzylinders 5 führt eine Auslaßöffnung 12 zu einem Auslaßschieber 13, der als Drehschieber dargestellt ist. Der Drehschieber verbindet den Füllzylinder je nach Steuerung mit einem Füllrohr 17, an welchem ein Abdrehgetriebe 15 angreift. Anstelle des Abdrehgetriebes kann auch ein Füllrohr für Dosen oder auch eine Vorsatzmaschine zum Portionieren angeschlossen sein.

Der Füllzylinder 5 ist nach oben durch den Deckel 30 abgeschlossen. In dem Deckel befindet sich die seitlich versetzt zur Hauptachse des Zylinders angeordnete Öffnung 7. Zur anderen Seite befindet sich ebenfalls seitlich versetzt zur Achse des Zylinders Z die Öffnung 29, die in einen von einer Abdeckung 24 umgrenzten Hohlraum 21 mündet. Dieser Raum steht in Verbindung mit einem Raum 22, an dem eine Vakuumpumpe 19 angeschlossen werden kann. Die Öffnung 29, die von dem Raum 21 in den Füllzylinder führt, ist durch ein in der Art einer Schwenkklappe ausgebildetes Ventil 26 verschließbar. Das Ventil 26 dient gleichzeitig als Sensor zur Erfassung des Füllstandes im Kolben 5. Die Schwenkklappe 26 ist so ausgebildet, daß sie auf der eingefüllten Masse aufschwimmt. Durch Erfassung der Winkelstellung der Schwenkklappe, beispielsweise mit Hilfe eines Potentiometers, lassen sich somit aus der Stellung der Schwenkklappe Signale ableiten, die den Füllstand im Füllzylinder und damit im Bereich der Schwenkklappe den vorhandenen Freiraum zwischen Masse und Deckel 30 wiederspiegeln.

Diese Signale werden an eine Regeleinrichtung 34 weitergegeben und dort mit einer gewünschten vorwählbaren Füllstandmarke verglichen. Bei Abweichungen von dem gewünschten Füllstand bzw. der gewünschten Größe des Freiraumes gibt die Regeleinrichtung 34 Signale zur Betätigung des Kolbenantriebs 10 für den Einlaufschieber 9 ab und steuert den Einlaufschieber derart, daß ein etwa gleichbleibend großer Freiraum während des gesamten Befüllvorganges des Füllzylinders 5 mit Masse aus dem Fülltrichter 3 aufrechterhalten bleibt.

Der Raum 21 und der auf der Anschlußseite der Vakuumpumpe 19 ausgebildete Raum 22 dient dabei als Vakuumdruckausgleichsraum und zur Wasserabscheidung.

Die Zuführung der Masse aus dem Fülltrichter 3 in den Füllzylinder 5 geschieht nun so, daß die Masse nach dem Durchtritt durch die Öffnung 7, wie durch den Pfeil P angedeutet, zunächst in Richtung auf die Zylinderwand 5a unmittelbar hinter der Einlaßöffnung gelenkt wird. Die einströmende Masse tritt also nicht in Richtung der Zylinderhauptachse Z in den Zylinderraum ein, sondern unter einem Winkel dazu.

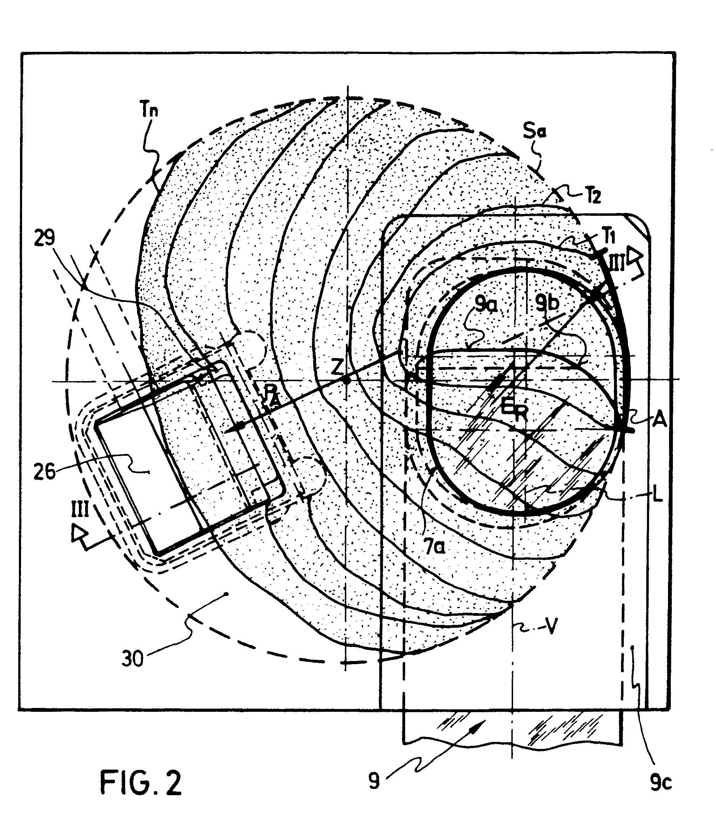

Im einzelnen kann dies aus der Figur 2 ersehen werden, die eine Draufsicht auf den Deckel 30 darstellt.

Dort ist zu sehen, daß die Öffnung 7 seitlich zur Hauptachse Z des Zylinders versetzt im Randbereich etwa angrenzend an die Zylinderwand 5a angeordnet ist. Die Öffnung 7 ist als langgestrecktes Oval ausgebildet. Die Kontur der Öffnung ist mit dem Bezugszeichen 7a versehen. Unterhalb der Öffnung wird in einer Führungsplatte 9c der Einlaufschieber 9 geführt. Die Verschieberichtung V des Einlaufschiebers 9 liegt entlang einer Sekante durch den Zylinder, die parallel zur Längserstreckungsachse L der langgestreckten Öffnung 7 ausgerichtet ist.

Die Öffnung 7 wird durch die vordere Kante 9a des Einlaufschiebers begrenzt. In Figur 2 gibt der schraffierte Bereich den Öffnungsquerschnitt wieder. Wie zu sehen ist, ist die vordere Kante 9a des Einlaufschiebers 9 zur Zylinderwand 5a hin mit einer Abrundung 9b versehen. Diese spezielle Ausgestaltung von Öffnung und Einlaufschiebervorderkante führt dazu, daß die einströmende Masse bei der gezeigten Schieberstellung von oben in den Zylinder mit einer zur Zylinderwand 5a hin geneigten Komponente, die durch den Pfeil $E_R$ angedeutet ist, einströmt. Die einströmende Masse liegt somit etwa zunächst über den verstärkt gezeichneten Bereich A der Zylinderwand 5a an dieser an. Der weitere zeitliche Ausbreitungsverlauf der Masse ist durch die Zeitlinien $T_1$, $T_2$ bis $T_n$ dargestellt. Die Masse breitet sich gemäß dieser Darstellung dann so aus, daß ihre Fronten in nacheinanderfolgenden Zeitabständen entlang dieser dargestellten Linien verlaufen. Es ist zu erkennen, daß die Ausbreitungsrichtung dieser Fronten etwa durch den Pfeil $P_A$ wiedergegeben werden kann.

Gegenüberliegend der einlaßschiebergesteuerten Öffnung 7 liegt etwa symmetrisch zur Ausbreitungsrichtung $P_A$ die Schwenkklappe 26. die den Zylinderinnenraum in geöffneter Stellung mit dem Vakuum verbindet und andererseits die Aufgabe des Sensors übernimmt, der den Füllstand erfaßt. Diese Schwenkklappe liegt durch diese Anordnung in einem Bereich, den der einströmende Massestrom zuletzt erreicht. In diesem Bereich ist es somit möglich, durch Abtasten der Schwenkstellung der Klappe dafür zu sorgen, daß der Einlaßschieber so geregelt wird, daß dieser Bereich niemals vollständig aufgefüllt wird, d.h., daß in diesem Bereich ein konstanter Freiraum 36 aufrechterhalten bleibt. Es wird also in diesem Bereich der Füllstand auf einem in etwa konstanten Pegel gehalten, so daß auch der Freiraum konstant bleibt.

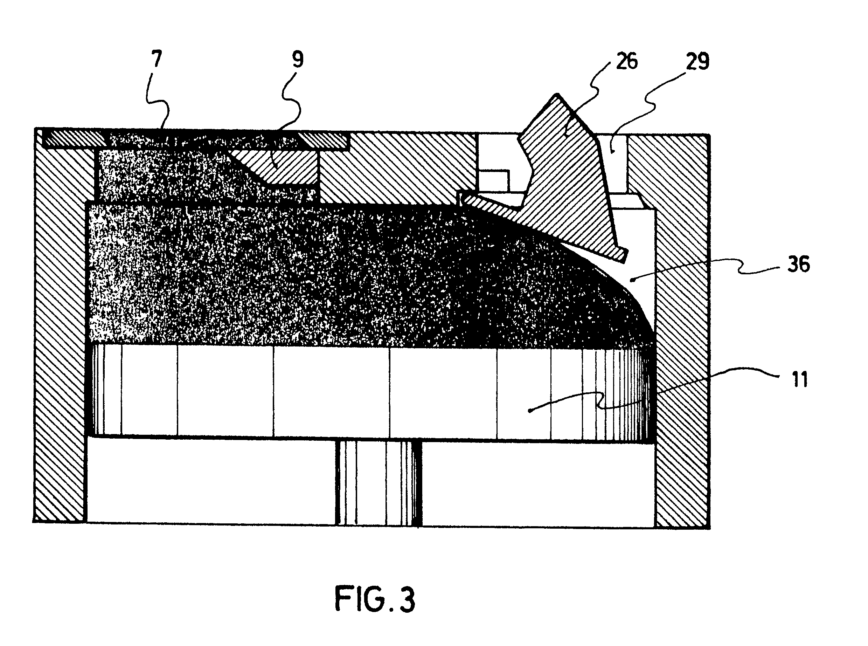

In dem in Figur 3 dargestellten Schnitt entlang der Linie III-III in Figur 2 ist dies deutlich zu erkennen.

Die erfindungsgemäße Vorrichtung arbeitet zur Durchführung des erfindungsgemäßen Verfahrens wie folgt:

Zunächst wird entweder von Hand oder mit einer Hebevorrichtung der Trichter 3 mit der zu portionierenden bzw. abzufüllenden lufthaltigen Masse gefüllt. Der Einlaßschieber 9 ist dabei geschlossen. Ebenso ist das Ventil bzw. die Schwenkklappe 26 geschlossen. Der Kolben 11 ist vollständig nach oben gefahren, d.h. das freie Volumen zwischen Deckel und Kolbenoberfläche ist Null. Die Stellung des Kolbens bzw. die Steuerung des Kolbenhubs wird durch das Wegmeßsystem W1 (sh. Figur 1) überwacht. Zum Überführen der Masse aus dem Innenraum des Trichters 3 in den Zylinder 5 wird nun mit der Abwärtsbewegung des Kolbens begonnen. Die als Rückschlagventil wirkende Schwenkklappe 26 fällt dabei ab und verbindet das Vakuumsystem mit dem Zylinderinnenraum.

Mit Hilfe der Vakuumpumpe 19 werden die Räume 21 und 22 und auch der Zylinderinnenraum evakuiert. Der Auslaßschieber 13 ist dabei ebenfalls geschlossen. Auch die Rückseite des Kolbens wird in nicht näher gezeigter Weise evakuiert.

Mit der einsetzenden Abwärtsbewegung des Kolbens wird nun auch der Einlaßschieber 9 geöffnet. Durch das erzeugte Vakuum im Inneren des Zylinders wird die in den Fülltrichter 3 eingefüllte Masse durch die Öffnung 7 hindurch in den Füllzylinder eingesaugt und wird dabei entsprechend dem ihr aufgezwungenen Weg zunächst auf die Zylinderwand hin abgelenkt. Von dort breitet sich die Masse in einem breiten Fächerstrom, wie in Figur 2 dargestellt, in Richtung auf die Schwenkklappe hin aus. Während dieses ganzen Vorganges wird die Masse entlüftet. Die entweichende Luft wird über den breiten niedrigen Kanal 40, der vom Bereich des Einlaßschiebers zu dem Hohlraum 21 führt, und auch über die von der Schwenkklappe 26 freigegebene Öffnung 29 abgesaugt. Der Freiraum wird durch Erfassen der Stellung der Schwenkklappe, die gleichzeitig als Sensor dient, und durch entsprechende Steuerung des Einlaufschiebers 9 dann auf einen konstanten Wert geregelt.

Der Kolben fährt nun weiter ab wobei sich der wachsende Innenraum bis auf den gleich groß bleibenden Freiraum 36 mit Masse füllt. Die Masse nimmt immer den ihr aufgezwungenen, geschilderten Weg und wird dabei gleichmäßig und mit hohem Wirkungsgrad entlüftet.

Beim allmählichen Nachuntenfahren des Kolbens 11 wird, wie erwähnt, die Regelung so vorgenommen, daß der Freiraum im wesentlichen für eine bestimmte abzufüllende Masse konstant bleibt. Damit wird auch erreicht, daß unabhängig davon, wie weit der Kolben 11 bereits nach unten gefahren ist, ein konstantes Volumen bzw. ein konstanter Freiraum 36 zu entlüften ist, was zu sehr gleichmäßigen Bedingungen und zu einer gleichmäßigen Entlüftung über den gesamten Abfüllvorgang hinweg führt.

Um die Regelung des Freiraums an die unterschiedlichen Voraussetzungen, wie z.B. hohes oder niederes Vakuum, teigige oder flüssige Massen usw., entsprechend anpassen zu können, wird die Zeit, die vom ersten Öffnen des Einlaufschiebers 9 bis zum ersten Aufschwimmen der Schwenkklappe 26 in der Startphase vergeht, gemessen.

Abhängig von dieser Zeit werden dann die Regelbedingungen gewählt und beispielsweise in einem nicht dargestellten Mikroprozessor abgespeichert, der dann die Funktionen für die weiteren Füllzyklen regelt.

Der Kolben 11 fährt nun solange nach unten, bis der Füllzylinder 5 mit Ausnahme des Freiraums 36 gefüllt ist. Nun schließt sofort der Einlaufschieber 9. Die Schließstellung ebenso wie die jeweiligen Zwischenstellungen des Einlaufschiebers 9 werden über das Wegmeßsystem W2 für den Schieber erfaßt.

In dieser Stellung bleibt der Freiraum immer noch mit dem Vakuum in Verbindung, d.h., die Schwenkklappe 26 ist noch, wie in Figur 3 gezeigt, offen.

Für die Ausstoßbewegung wird dann der Kolben nach oben gefahren. Er verdrängt dabei die restliche Luft über der Masse. Da die Schwenkklappe so angeordnet ist, daß beim Hochdrücken erst dann ein vollständiges Verschließen der Schwenkklappe erfolgt, wenn der Freiraum 36 zu Null geworden ist, schließt die Schwenkklappe 26 erst dann, wenn tatsächlich die Luft aus dem Freiraum vollkommen entwichen bzw. kein Freiraum mehr vorhanden ist.

Nach einer bestimmten Aufwärtsbewegung des Kolbens ist somit die Luft vollständig aus dem Zylinderinnenraum entwichen, der Einlaufschieber und die Schwenkklappe 26 verschließen die entsprechenden Öffnungen 7 bzw. 29 und auch der Auslaßschieber ist geschlossen.

Um von Beginn an einen konstanten Füllstrom zu erreichen, muß über die gesamte Fülldauer der im Zylinder 5 herrschende Druck nahezu konstant bleiben. Dies wird durch einen vor dem eigentlichen Ausstoßbeginn durchgeführten Druckaufbau erreicht. Dies kann so geschehen, daß mit dem Öffnen des Auslaßschiebers gewartet wird, bis sich ein voreingestellter Druckwert aufgebaut hat.

Der Wert des benötigten Ausfülldruckes kann auch nach jedem Arbeitsbeginn (Chargenwechsel bzw. Tempoänderung) durch einen Meßvorgang in der Startphase neu ermittelt werden. Dies bedeutet, daß bei der ersten Zylinderfüllung ohne Druckaufbau gestartet wird, d.h., zugleich mit dem Nachobenfahren des Kolbens wird auch der Drehschieber 13 geöffnet. Mit dem Drucksensor 32 wird der Druck erfaßt, der sich im Zylinderraum dabei einstellt. Dieser Druck steigt allmählich an und erhöht sich dann bis auf einen konstanten Druckwert, der in einer Steuereinheit 33 abgespeichert wird. Bei jeder weiteren Zylinderfüllung wird dann dieser abgespeicherte Druckwert als Vorgabe für den Druckaufbau verwendet, d.h., der Auslaßschieber 13 bleibt bei den weiteren Zylinderfüllungen solange geschlossen, bis der Druck den abgespeicherten Wert erreicht. Dann öffnet der Auslaßschieber 13 und die Masse wird unter konstantem Druck mit einem konstanten Füllstrom, d.h., mit einer voreingestellten Geschwindigkeit, ausgestoßen.

Das Portionieren erfolgt durch schrittweises Bewegen des Kolbens 11, dessen Portionierhub für die Ausstoßgeschwindigkeit durch das Wegmeßsystem W1 erfaßt und über eine digitale, nicht dargestellte elektronische Steuerung durch ein Servoventil geregelt. Der Drehschieber 13 wird jeweils mit Beginn eines Portionsausstoßes geöffnet und nach dessen Ende wieder geschlossen. In der Füllpause kann das Abdrehen der Wursthülle mit der Abdreheinrichtung 15 erfolgen. Der Impulsgeber W4 erfaßt dabei den Istwert der Abdrehzahl, der in einer Steuereinrichtung mit dem eingestellten Sollwert verglichen wird.

Sobald das Zylindervolumen die eingestellte Portionsgröße unterschreitet, stoppt die Portionierung und der Einlaßschieber wird wieder geöffnet. Dadurch wird die Restmasse in den Trichter zurückgestoßen. Der Ein laßschieber schließt dann und die nächste Befüllung kann beginnen.

Wenn beispielsweise in Wurstdosen abgefüllt werden soll, kann auch das gesamte Zylindervolumen ausgefüllt werden.

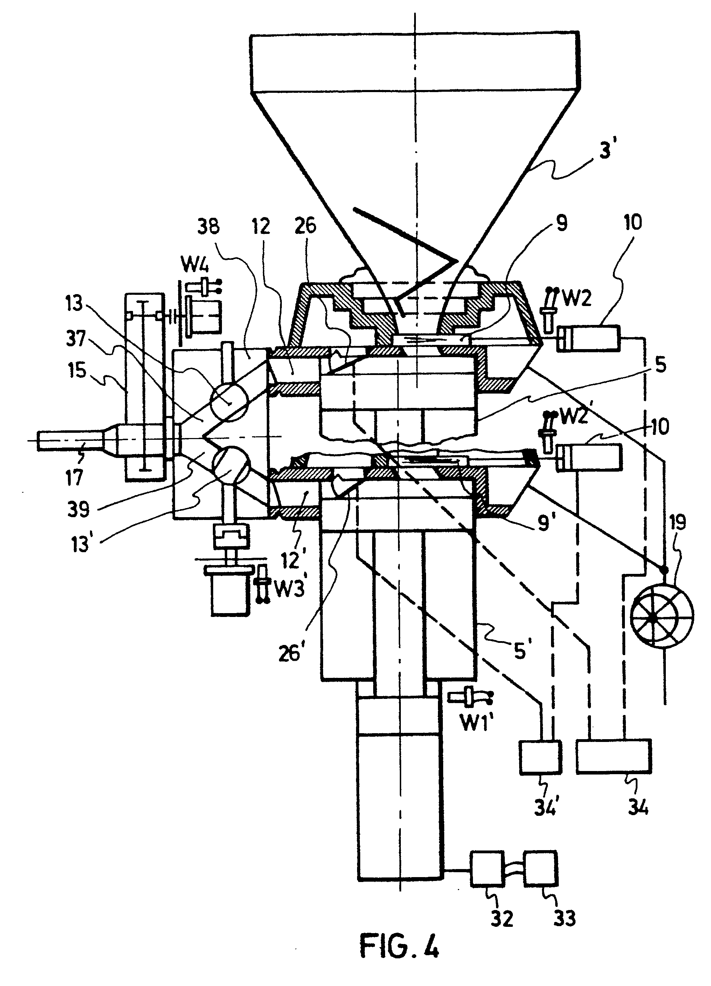

Bei dem in Figur 4 dargestellten Ausführungsbeispiel umfaßt die Vorrichtung zwei Zylinder 5 und 5', von denen jeder mit jeweils einer am Fülltrichter 3' ausgebildeten separaten Auslaßöffnung in Verbindung steht. In jeder Auslaßöffnung ist ein Schieber 9 und 9' vorgesehen, wobei die konkrete Ausgestaltung gemäß dem anhand von Figur 2 und 3 beschriebenen Ausführungsbeispiel jeweils vorgenommen ist. Die Schieber 9 und 9' werden, wie oben beschrieben, jeweils mit zugeordneten Schwenkklappen 26 bzw. 26' geregelt. Die Zylinder 5 bzw. 5' sind in der Zeichnung nur prinzipiell angedeutet und werden bei einem konkreten Ausführungsbeispiel, beispielsweise nebeneinander in paralleler Höhe unter dem zugeordneten Einlaufschieber 9 bzw 9' angeordnet. Die Funktionsweise entspricht im wesentlichen der zuvor beschriebenen. Die Auslaßöffnungen 12 und, 12' der beiden Zylinder 5 und 5' werden durch in einer Einheit 38 zusammenlaufende Kanäle 37 und 39 zu einem gemeinsamen Füllrohr 17 zusammengeleitet. In den beiden Kanälen 37 und 39 befindet sich jeweils ein Drehschieber 13 bzw. 13'.

Mit dieser Vorrichtung können kontinuierlich große Mengen von lufthaltiger Masse abgefüllt werden, weil sich die Kolbenbewegung in den Zylindern 5 und 5' derart koodinieren läßt, daß während des Ausfüllvorganges eines Zylinders - beispielsweise des Zylinders 5 - der andere Zylinder 5' aufgefüllt wird, so daß alternierend die Zylinder gefüllt bzw. entleert werden.

Durch entsprechende alternierende Steuerung der Drehschieber 13 und 13' wird ein konstanter Füllstrom ohne jede Unterbrechung am Füllrohr 17 erhalten.

Ein Nachfüllen der Fülltrichter 3 bzw. 3' ist sowohl beim ersten als auch beim zweiten Ausführungsbeispiel jederzeit möglich, da die Fülltrichter oben offen sind, d.h. unter atmosphärischem Druck stehen.

Die Steuerung der Einlaufschieber geschieht über zugeordnete Regeleinrichtungen 34 und 34', wie bereits zuvor beschrieben. Den Einlaufschiebern 9 bzw. 9' sind demnach entsprechende Kolbenantriebe 10 bzw. 10' zugeordnet. Die jeweilige Stellung der Einlaufschieber wird über die Sensoren W2 und W2' erfaßt und im Regelkreislauf verwertet.

Auch bei dieser Vorrichtung muß nicht unbedingt ein dargestelltes Abdrehgetriebe 15 am Füllrohr 17 vorhanden sein, vielmehr kann auch diese Vorrichtung zum kontinuierlichen Füllen, zum Portionieren oder zum Beschicken von Vorsatzmaschinen Verwendung finden, wobei in allen Fällen das Füllgut auf einen sehr geringen Restluftanteil, wie zuvor beschrieben, entlüftet werden kann.

**Ansprüche**

1. Verfahren zum Abfüllen lufthaltiger, verformbarer Massen, insbesondere zum Abfüllen von Wurstmassen, bei dem die Masse in einem Massestrom von einem Fülltrichter (3) in einen Füllzylinder (5) überführt wird, in welchem zur Entlüftung der Masse ein Unterdruck bezüglich des Fülltrichter (3) erzeugt wird und bei dem die überführte Masse dann mit einem im Füllzylinder (5) angeordneten Kolben (11) aus diesem ausgestoßen wird, dadurch **gekennzeichnet,** daß der Massestrom beim Überführen in den Füllzylinder (5) so gelenkt wird, daß er sich beim Eintritt in den Füllzylinder (5) unter Bildung eines Winkels zur Verschieberichtung des Kolbens (11) zunächst zur Zylinderwand (5a) hin bewegt und daß der Füllstand während des Befüllens mit Masse im Füllzylinder (5) derart geregelt wird, daß während des Befüllens ein im wesentlichen konstanter Freiraum im Füllzylinder verbleibt.

2. Verfahren nach Anspruch 1, dadurch **gekennzeichnet,** daß vom Beginn des Befüllvorganges an, der befüllbare Innenraum des Füllzylinders (5) durch Abfahren des Kolbens (11) von Null aus kontinuierlich vergrößert wird.

3. Verfahren nach Anspruch 2, dadurch **gekennzeichnet,** daß der Freiraum während des Befüllens durch Regelung des Öffnungsquerschnitts einer Öffnung (7), durch die der Massestrom vom Fülltrichter (3) in den darunter angeordneten Füllzylinder (5) gelangt, konstant gehalten wird.

4. Verfahren nach wenigstens einem der Ansprüche 1 bis 3, dadurch **gekennzeichnet,** daß die Entlüftung des Füllzylinders (5) an einer der Auftreffstelle des Massestroms an der Zylinderwand (5a) diametral gegenüberliegenden, am höchsten Punkt des Füllzylinders gelegenen Stelle vorgenommen wird.

5. Verfahren nach wenigstens einem der vorangegangenen Ansprüche, dadurch **gekennzeichnet,** daß der Fülltrichter (3) während des Befüllens des Füllzylinders (5) unter atmosphärischem Druck gehalten wird.

6. Vorrichtung zum Abfüllen lufthaltiger, verformbarer Massen, insbesondere zum Abfüllen von Wurstmassen, mit einem Fülltrichter (3), mit einem Füllzylinder (5), der mit dem Fülltrichter (3) über eine mit einem Einlaufschieber (9) verschließbare Öffnung (7) in Verbindung steht und in dem ein Kolben (11) angeordnet ist und mit einer schiebergesteuerten Auslaßöffnung (12), durch die die vom Fülltrichter (3) in den Füllzylinder (5) geförderte Masse durch Steuerung des Kolbenhubs in dosierbaren Mengen ausgestoßen werden kann und mit einem Ventil (26), über das der Füllzylinder (5) beim Befüllen mit Masse aus dem Fülltrichter (3) unter Vakuum gesetzt wird, dadurch **gekennzeichnet,** daß die Öffnung (7) so angeordnet und ausgebildet ist, daß der durchtretende Massestrom auf die Zylinderwand (5a) hingelenkt wird, und daß ein Sensor (26, 26')-vorgesehen ist, der den Füllstand während des Befüllens des Füllzylinders (5, 5') erfaßt und daß eine Regeleinrichtung vorgesehen ist, die während der beim Befüllen erfolgenden Abwärtsbewegung des Kolbens den Einlaufschieber (9, 9') abhängig von den Signalen des Sensors (26, 26') derart steuert, daß beim Befüllen ein im wesentlichen konstanter Freiraum (36) zwischen Masse und Füllzylinderdeckel (30) verbleibt.

7. Vorrichtung nach Anspruch 6, dadurch **gekennzeichnet,** daß die Öffnung (7) im Füllzylinderdeckel seitlich versetzt zur Achse (Z) des Füllzylinders (5) angeordnet ist und daß das Ventil (26) im Zylinderdeckel (30) etwa diametral zu der Stelle (Bereich A) an der der durch die Öffnung eintretenden Massestrom auf die Zylinderwand (5a) auftrifft angeordnet ist.

8. Vorrichtung nach Anspruch 6 oder 7, dadurch **gekennzeichnet,** daß die Umlenkung des Massestroms zur Zylinderwand (5a) durch eine entsprechende Formung (9b) der die Öffnung (7) begrenzenden Vorderkante (9b) des Einlaufschiebers (9) vorgenommen wird.

9. Vorrichtung nach einem der Ansprüche 6 bis 8, dadurch **gekennzeichnet,** daß das Ventil (26) als Schwenkklappe ausgebildet ist und zugleich der Sensor ist.

10. Vorrichtung nach wenigstens einem der Ansprüche 6 bis 9, dadurch **gekennzeichnet,** daß die Regeleinrichtung (34) den Öffnungsquerschnitt der Öffnung (7) durch Regelung des Einlaufschiebers (9) zur Aufrechterhaltung des konstanten Freiraums beeinflußt.

11. Vorrichtung nach wenigstens einem der Ansprüche 6 bis 10, dadurch **gekennzeichnet,** daß über dem Füllzylinderdeckel (30) eine Abdeckung (24) vorgesehen ist, die einen Hohlraum (21, 22) begrenzt, an dem das Vakuumsystem (19) angeschlossen ist und mit dem der Füllzylinder (5) über das Ventil (26, 26') in Verbindung steht.

12. Vorrichtung nach wenigstens einem der vorangegangenen Vorrichtungsansprüche, dadurch **gekennzeichnet,** daß im Bereich des Einlaufschiebers (7) auf der Füllzylinderseite ein breiter, aber niedriger Kanal (40) mündet, der zu dem Hohlraum (21, 22) führt.

13. Vorrichtung nach wenigstens einem der vorangegangenen Vorrichtungsansprüche, dadurch **gekennzeichnet,** daß der Fülltrichter (3) oben offen ist.

14. Vorrichtung nach Anspruch 9, dadurch **gekennzeichnet,** daß ein Zeitmesser vorgesehen ist, mit dem die Zeit, die zwischen dem Öffnen des Einlaufschiebers (9) und dem ersten Aufschwimmen der Schwenkklappe (26) vergeht, gemessen wird und daß abhängig von dieser Zeit die Regelbedingungen des Regelkreises (26, 26'; 10, 10') für eine bestimmte Masse festgelegt werden.

15. Vorrichtung nach wenigstens einem der vorangegangenen Vorrichtungsansprüche, dadurch **gekennzeichnet,** daß eine Steuereinheit (33) vorgesehen ist, mit der nach jedem Arbeitsbeginn eines bestimmten Füllzyklus der benötigte Ausfülldruck in der Startphase des Ausfüllvorganges ermittelt wird.

16. Vorrichtung nach Anspruch 15, dadurch **gekennzeichnet,** daß die Steuereinheit (33) mit einem Drucksensor (32) verbunden ist und für eine jeweils erste Zylinderfüllung den Druckverlauf beim Ausstoßen erfaßt und daß ein dabei erfaßter stabilisierter Druckwert der Steuereinheit (33) abgespeichert und für den jeweils nächsten Zyklus als Vorgabe für den Druckaufbau herangezogen wird

17. Vorrichtung nach Anspruch 15, dadurch **gekennzeichnet,** daß die Steuereinheit (33) mit einem Drucksensor (32) verbunden ist, und für eine jeweils erste Zylinderfüllung den Druckverlauf beim Ausstoßen erfaßt und daß ein dabei erfaßter stabilisierter Druckwert der Steuereinheit (33) abgespeichert und für die weiteren Füllzyklen als Vorgabe für den Druckaufbau herangezogen wird.

18. Vorrichtung nach wenigstens einem der vorangegangenen Vorrichtungsansprüche, dadurch **gekennzeichnet,** daß der Fülltrichter (3) zwei Auslässe aufweist, über die jeweils ein zugeordneter Füllzylinder (5, 5') über jeweils einen geregelten Einlaufschieber (9, 9') befüllbar ist.

19. Vorrichtung nach Anspruch 18, dadurch **gekennzeichnet,** daß die Einlaufschieber (9, 9') unabhängig voneinander regelbar sind.

20. Vorrichtung nach Anspruch 18 oder 19, dadurch **gekennzeichnet,** daß die Ausstoßbewegung des einen Zylinders (5, 5,) mit dem Hochlauf des anderen Zylinders (5', 5) so koordiniert wird, daß ein konstanter Volumenstrom erhalten bleibt.

## Claims

1. Process for the filling of air-containing deformable masses, especially for the filling of sausage masses, wherein the mass in transferred in a mass flow from a filling funnel (3) into a filling cylinder (5), in which a vacuum in generated in relation to the filling funnel (3) in order to remove air from the mass, and wherein the transferred mass is then ejected from the filling cylinder (5) by means of a piston (11) arranged in the latter, characterized in that the mass flow is so guided during its transfer into the filling cylinder (5) that, when it enters the filling cylinder (5), it first moves towards the cylinder wall (5a), to form an angle relative to the direction of displacement of the piston (11), and in that, during the filling with mass, the filling level in the filling cylinder (5) is regulated in such a way that, during filling, an essentially constant free space remains in the filling cylinder.

2. Process according to Claim 1, characterized in that, from the start of the filling operation onwards, the fillable interior of the filling cylinder (5) is increased continuously from zero as a result of the downward movement of the piston (11).

3. Process according to Claim 2, characterized in that, during filling, the free space is kept constant by regulating the opening cross-section of an orifice (7), through which the mass flow passes from the filling funnel (3) into the filling cylinder (5) located underneath it.

4. Process according to at least one of Claims 1 to 3, characterized in that the removal of air from the filling cylinder (5) is carried out at a location diametrically opposite the point of impact of the mass flow on the cylinder wall (5a) and situated at the highest point of the filling cylinder.

5. Process according to at least one of the preceding claims, characterized in that, during filling of the filling cylinder (5), the filling funnel (3) is maintained under atmospheric pressure.

6. Appliance for the filling of air-containing deformable masses, especially for the filling of sausage masses, with a filling funnel (3), with a filling cylinder (5) which is connected to the filling funnel (3) via an orifice (7) closable by means of a run-in slide (9) and in which a piston (11) is arranged, with a slide-controlled outlet orifice (12), through which the mass conveyed from the filling funnel (3) into the filling cylinder (5) can be ejected in proportionable quantities by controlling the piston stroke, and with a valve (26), via which the filling cylinder (5) is put under a vacuum when it is being filled with mass from the filling funnel (3), characterized in that the orifice (7) is so arranged and designed that the mass flow passing through it is guided towards the cylinder wall (5a), in that there is a sensor (26, 26') which detects the filling level during the filling of the filling cylinder (5, 5'), and in that there is a regulating device which, during the downward movement of the piston taking place during filling, controls the run-in slide (9, 9') in dependence on the signals of the sensor (26, 26'), in such a way that, during filling, an essentially constant free space (36) remains between the mass and the filling-cylinder cover (30).

7. Appliance according to Claim 6, characterized in that the orifice (7) in the filling-cylinder cover is arranged offset laterally relative to the axis (Z) of the filling cylinder (5), and in that the valve (26) is arranged in the cylinder cover (30) approximately diametrically relative to the location (region A) at which the mass flow entering through the orifice strikes the cylinder wall (5a).

8. Appliance according to Claim 6 or 7, characterized in that the deflection of the mass flow to the cylinder wall (5a) is carried out by means of an appropriate shaping (9b) of the front edge (9b) of the run-in slide (9) limiting the orifice (7).

9. Appliance according to one of Claims 6 to 8, characterized in that the valve (26) is designed as a pivoting flap and is at the same time the sensor.

10. Appliance according to at least one of Claims 6 to 9, characterized in that the regulating device (34) influences the opening cross-section of the orifice (7) by regulating the run-in slide (9) in order to maintain the constant free space.

11. Appliance according to at least one of Claims 6 to 10, characterized in that above the filling-cylinder cover (30) there is a shroud (24) limiting a cavity (21, 22), to which the vacuum system (19) is connected and with which the filling cylinder (5) is in communication via the valve (26, 26').

12. Appliance according to at least one of the preceding appliance claims, characterized in that a wide, but low channel (40) leading to the cavity (21, 22) opens out in the region of the run-in slide (7) (sic) on the same side as the filling cylinder.

13. Appliance according to at least one of the preceding appliance claims, characterized in that the filling funnel (3) is open at the top.

14. Appliance according to Claim 9, characterized in that there is a timer, by means of which the time elapsing between the opening of the run-in slide (9) and the first floating of the pivoting flap (26) is measured, and in that the regulating conditions of the regulating loop (26, 26'; 10, 10') are set for a particular mass in dependence on this time.

15. Appliance according to at least one of the preceding appliance claims, characterized in that there is a control unit (33), by means of which the required emptying pressure in the starting phase of the emptying operation is determined after each start of work of a specific filling cycle.

16. Appliance according to Claim 15, characterized in that the control unit (33) is connected to a pressure sensor (32) and detects the pressure trend during ejection for a respective first cylinder filling, and in that a stabilized pressure value thereby detected is stored (lacuna) the control unit (33) and used for the next respective cycle as a presetting for the pressure build-up.

17. Appliance according to Claim 15, characterized in that the control unit (33) is connected to a pressure sensor (32) and detects the pressure trend during ejection for a respective first cylinder filling, and in that a stabilized pressure value thereby detected is stored (lacuna) the control unit (33) and used for the further filling cycles as a presetting for the pressure build-up.

18. Appliance according to at least one of the preceding appliance claims, characterized in that the filling funnel (3) has two outlets, via each of which an associated filling cylinder (5, 5') can be filled via a respective regulated run-in slide (9, 9').

19. Appliance according to Claim 18, characterized in that the run-in slides (9, 9') can be regulated independently of one another.

20. Appliance according to Claim 18 or 19, characterized in that the ejection movement of one cylinder (5, 5') is so coordinated with the run-up of the other cylinder (5', 5) that a constant volume flow is maintained.

**Revendications**

1. Procédé pour bourrer des produits déformables et contenant de l'air, en particulier pour bourrer des chairs à saucisses, par lequel le produit est transféré en un flux massique d'un entonnoir de remplissage (3) à un cylindre de remplissage (5) dans lequel est créée, pour l'aération du produit, une dépression par rapport à l'entonnoir de remplissage (3) et par lequel la masse transférée est expulsée du cylindre de remplissage (5) au moyen d'un piston (11) monté dans celui-ci, **caractérisé en ce** que, lors du transfert dans le cylindre de remplissage (5), le flux massique est dirigé de telle façon que, à l'entrée dans le cylindre de remplissage (5), il se déplace tout d'abord en direction de la paroi (5a) du cylindre en formant un angle avec la direction de déplacement du piston (11), et que pendant l'introduction du produit dans le cylindre de remplissage (5), le niveau de remplissage est réglé de façon à conserver pendant le remplissage un espace libre sensiblement constant dans le cylindre de remplissage.

2. Procédé selon la revendication 1, caractérisé en ce que, à partir du commencement de l'opération de remplissage, l'espace intérieur chargeable du cylindre de remplissage (5) est agrandi en continu à partir de zéro par la descente du piston (11).

3. Procédé selon la revendication 2, caractérisé en ce que, pendant le remplissage, l'espace libre est maintenu constant par le réglage de la section de passage d'une ouverture (7) par laquelle le flux massique passe de l'entonnoir de remplissage (3) dans le cylindre de remplissage (5) disposé en dessous de celui-ci.

4. Procédé selon l'une des revendications 1 à 3, caractérisé en ce que l'aération du cylindre de remplissage (5) est effectuée à un endroit diamétralement opposé au point d'impact du flux massique sur la paroi (5a) du cylindre et situé au point le plus haut du cylindre de remplissage.

5. Procédé selon l'une des revendications précédentes, caractérisé en ce que l'entonnoir de remplissage (3) est maintenu sous pression atmosphérique pendant le chargement du cylindre de remplissage (5).

6. Dispositif pour bourrer des produits déformables et contenant de l'air, en particulier pour bourrer des chairs à saucisses, comprenant un entonnoir de remplissage (3), un cylindre de remplissage (5) communiquant avec l'entonnoir de remplissage (3) par l'intermédiaire d'une ouverture (7) obturable au moyen d'un tiroir d'entrée (9) et équipé d'un piston (11) une ouverture de sortie (12) commandée par tiroir par laquelle la masse transportée de l'entonnoir de remplissage (3) dans le cylindre de remplissage (5) peut être expulsée en quantités dosées par la commande de la course du piston, et une soupape (26) par l'intermédiaire de laquelle le cylindre de remplissage (5) est mis sous vide lors de l'introduction de la masse à partir de l'entonnoir de remplissage (3), **caractérisé en ce** que l'ouverture (7) est disposée et conformée de telle façon que le flux massique, en passant, est dirigé sur la paroi (5a) du cylindre, qu'il est prévu un détecteur (26, 26') qui détecte le niveau de remplissage pendant le chargement du cylindre de remplissage (5, 5'), et qu'il est prévu un dispositif de réglage qui, lors du mouvement descendant du piston intervenant lors du remplissage, commande le tiroir d'entrée (9, 9') en fonction des signaux du détecteur (26, 26') de façon à conserver lors du remplissage un espace libre (36) sensiblement constant entre la masse et le couvercle (30) du cylindre de remplissage.

7. Dispositif selon la revendication 6, caractérisé en ce que l'ouverture (7) dans le couvercle du cylindre de remplissage est décalée latéralement par rapport à l'axe (Z) du cylindre de remplissage (5) , et que la soupape (26) est disposée dans le couvercle (30) du cylindre, dans une position sensiblement diamétralement opposée à l'endroit (région A) où le flux massique entrant par l'ouverture arrive sur la paroi (5a) du cylindre.

8. Dispositif selon l'une des revendications 6 ou 7, caractérisé en ce que la déviation du flux massique vers la paroi (5a) du cylindre est réalisée par une conformation correspondante (9b) du bord antérieur (9b) du tiroir d'entrée (9) qui délimite l'ouverture (7).

9. Dispositif selon l'une des revendications 6 à 8, caractérisé en ce que la soupape (26) est conformée en clapet pivotant et constitue en même temps le détecteur.

10. Dispositif selon l'une des revendications 6 à 9, caractérisé en ce que le dispositif de réglage (34) agit sur la section de passage de l'ouverture (7) par le réglage du tiroir d'entrée (9) pour maintenir l'espace libre constant.

11. Dispositif selon l'une des revendications 6 à 10, caractérisé en ce qu au-dessus du couvercle (30) du cylindre de remplissage est prévu un chapeau (24) qui délimite une cavité (21, 22) à laquelle est raccordé le système à vide (19) et avec laquelle le cylindre de remplissage (5) communique par l'intermédiaire de la soupape (26, 26').

12. Dispositif selon l'une des revendications précédentes, caractérisé en ce que dans la région du tiroir d'entrée (9) débouche, du côté du cylindre de remplissage, un canal (40) large mais court qui conduit à la cavité (21, 22).

13. Dispositif selon l'une des revendications précédentes, caractérisé en ce que l'entonnoir de remplissage (3) est ouvert en haut.

14. Dispositif selon la revendication 9, caractérisé en ce qu'il comprend un chronomètre qui mesure le temps écoulé entre l'ouverture du tiroir d'entrée (9) et le premier flottement du clapet pivotant (26), et que les conditions de réglage du circuit de réglage (26, 26'; 10, 10') sont définies pour une masse déterminée en fonction de ce temps.

15. Dispositif selon l'une des revendications précédentes, caractérisé en ce qu'il comprend une unité de commande (33) qui détermine, après chaque début d'un cycle de remplissage déterminé, la pression d'expulsion nécessaire dans la phase de démarrage de l'opération d'expulsion.

16. Dispositif selon la revendication 15, caractérisé en ce que l'unité de commande (33) est reliée à un détecteur manométrique (32) et détermine respectivement pour un premier remplissage du cylindre la courbe de pression à l'expulsion, et qu'une valeur de pression stabilisée de l'unité de commande (33) alors déterminée est mémorisée et utilisée respectivement pour le cycle suivant comme valeur de consigne pour la montée en pression.

17. Dispositif selon la revendication 15, caractérisé en ce que l'unité de commande (33) est reliée à un détecteur manométrique (32) et détermine respectivement pour un premier remplissage du cylindre la courbe de pression à l'expulsion, et qu'une valeur de pression stabilisée de l'unité de commande (33) alors déterminée est mémorisée et utilisée pour les cycles de remplissage suivants comme valeur de consigne pour la montée en pression.

18. Dispositif selon l'une des revendications précédentes, caractérisé en ce que l'entonnoir de remplissage (3) comporte deux sorties qui permettent le chargement de respectivement un cylindre de remplissage associé (5, 5') par l'intermédiaire de respectivement un tiroir d'entrée (9, 9') réglé.

19. Dispositif selon la revendication 18, caractérisé en ce que les tiroirs d'entrée (9, 9') peuvent être réglés indépendamment l'un de l'autre.

20. Dispositif selon l'une des revendications 18 ou 19, caractérisé en ce que le mouvement d'expulsion de l'un des cylindres (5, 5') est coordonné avec la montée de l'autre cylindre (5', 5) de façon à conserver un flux volumique constant.

EP 0 229 296 B1

FIG.1

14

FIG. 2

FIG.3

16

FIG. 4